# EUROPÄISCHE PATENTSCHRIFT

(11) **EP 0 915 246 B1**
(45) Veröffentlichungstag und Bekanntmachung des Hinweises auf die Patenterteilung: **14.05.2003**
(21) Anmeldenummer: 98119577.9
(22) Anmeldetag: 16.10.1998
(51) Int. Cl.: F02K 1/70, F02K 1/60

(54) **Schubumkehrvorrichtung eines Flug-Strahltriebwerkes**
Thrust reverser for an aircraft jet-engine
Inverseur de poussée pour un réacteur d'avion

(30) Priorität: 10.11.1997 DE 19749576
(43) Veröffentlichungstag der Anmeldung: 12.05.1999
(73) Patentinhaber: Rolls-Royce Deutschland Ltd & Co KG, 15827 Dahlewitz (DE)
(72) Erfinder: Mundt, Christian, Dr., 15732 Eichwalde (DE)
(74) Vertreter: Weber, Joachim, Dr.

(56) Entgegenhaltungen:
- EP-A- 0 368 725
- EP-A- 0 764 779
- US-A- 3 601 992
- US-A- 4 916 895

## Beschreibung

Die Erfindung betrifft eine Schubumkehrvorrichtung eines Flug-Strahltriebwerkes mit zumindest zwei in der Triebwerkdüse vorgesehenen Schwenktüren, die in Arbeitsposition den ansonsten durch die Triebwerkdüse nach hinten gerichteten Triebwerk-Gasstrom seitlich aus der Triebwerkdüse hinaus im wesentlichen nach vorne umlenken und hierzu an ihrem in Arbeitsposition stromabwärtigen Ende eine Umlenkplatte aufweisen, stromauf derer die Innenwand der Schwenktür gegenüber einem weiter stromaufwärtigen Bereich eingezogen ist und somit bezüglich der Innenkontur der Schwenktür eine Aussparung bildet Zum technischen Umfeld wird beispielshalber auf die EP 0 368 725 B1 verwiesen.

Flug-Strahltriebwerke verfügen im allgemeinen über Schubumkehrvorrichtungen, mit Hilfe derer die Landestrecke des Flugzeuges durch Umlenkung des üblicherweise nach hinten gerichteten Strahles bzw. Triebwerk-Gasstromes nach vorne zusätzlich zur Wirkung der Flugzeug-Bremsen und des aerodynamischen Widerstandes verringert werden kann. Neben Kaskaden-Schubumkehrern, die üblicherweise nur den Nebenstrom des Strahltriebwerkes umlenken, gibt es verschiedene Bauformen von Schwenktür-Schubumkehrvorrichtungen, die teilweise nur den Nebenstrom, oder auch sowohl den Nebenstrom als auch den Hauptstrom des Strahltriebwerkes umzulenken in der Lage sind.

Bei den Schwenktür-Schubumkehrvorrichtungen, die Inhalt der vorliegenden Erfindung sind, sind - bezogen auf die Arbeitsposition der Schwenktür, in welcher diese aus der Triebwerksdüse ausgeschwenkt ist - am stromabwärtigen Ende üblicherweise Umlenkplatten vorgesehen, die den Triebwerk-Gasstrom bzw. Triebwerkstrahl derart nach vorne umlenken, daß ein größerer Rückwärtsschub bezüglich des Flugzeuges erfolgt Im Normalbetrieb, wenn sich die Schwenktüren in ihrer Ruheposition befinden und somit nicht aus, der Triebwerkdüse ausgeschwenkt sind, wenn also das Flug-Strahltriebwerk im Vorwärtsschubbetrieb arbeitet, soll durch die eingeklappten Schwenktüren die Gasströmung innerhalb der Düse so gering als möglich beeinflußt werden.

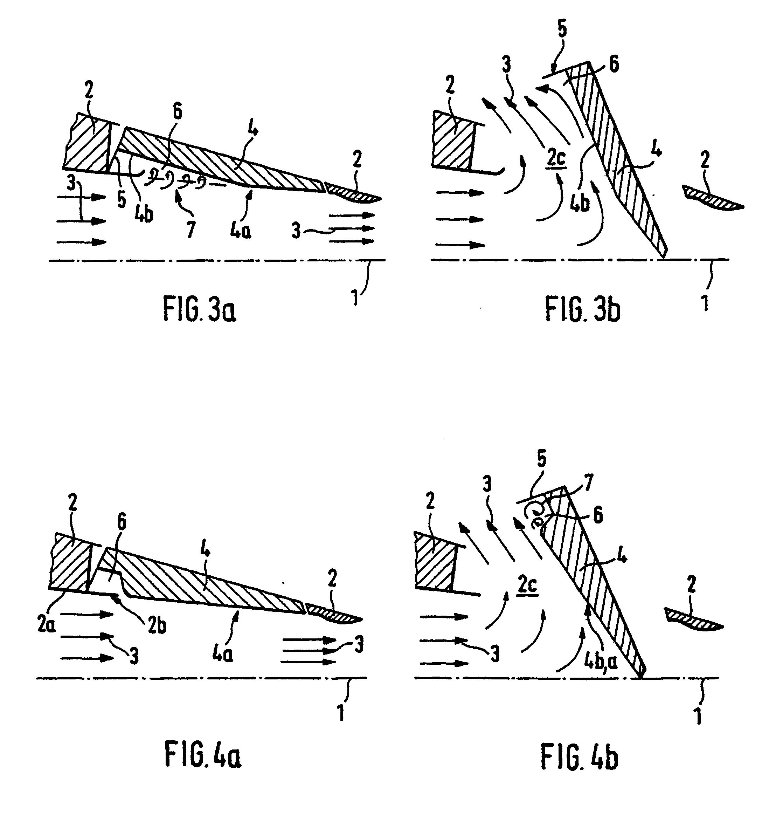

Grundsätzlich können einfach gestaltete Schwenktüren von Schubumkehrvorrichtungen die im folgenden erläuterten zwei verschiedenen Bauweisen aufzeigen. Die erste Bauweise ist in Fig. 3a im Vorwärtsschubbetrieb und in Fig. 3b im Rückwärtsschubbetrieb dargestellt, die zweite Bauweise in Fig. 4a wieder im Vorwärtsschubbetrieb und in Fig. 4b im Rückwärtsschubbetrieb. Dabei sind gleiche Bauteile stets mit gleichen Bezugsziffem bezeichnet, ebenso wie im später noch erläuterten bevorzugten Ausführungsbeispiel der vorliegenden Erfindung.

So ist mit der Bezugsziffer 1 die Längsachse des Flug-Strahltriebwerkes bezeichnet, von welchem lediglich ein Teil der Triebwerkdüse 2 dargestellt ist. Mit der Bezugsziffer 3 ist der Triebwerk-Gasstrom in seiner Gesamtheit bezeichnet, wobei hier nicht zwischen dem Nebenstrom und dem Hauptstrom eines sog. Zweikreis- oder Zweistrahltriebwerkes unterschieden wird. In der nur hälftig dargestellten Triebwerkdüse 2 sind zumindest zwei Schwenktüren 4 vorgesehen, wobei üblicherweise eine in der oberen Hälfte und eine in der unteren Hälfte der Triebwerkdüse 2 angeordnet ist. Wie die Fig. 3a, 4a zeigen, bildet diese Schwenktüre 4 im geschlossenen Zustand, d. h. in deren Ruheposition, einen Bestandteil der Triebwerkdüse 2, indem sie einen in der Triebwerkdüse 2 vorgesehenen Durchbruch 2c zur Aufnahme der Schwenktür 4 verschließt.

In ihrer Arbeitsposition gemäß den Fig. 3b, 4b ist die Schwenktür 4 aus der Triebwerkdüse 2 herausgeschwenkt und sperrt dabei mit ihrem jetzt unteren Ende den weiteren Weg nach rechts für den Triebwerk-Gasstrom 3 ab, so daß dieser - wie durch die Pfeile dargestellt - über den Durchbruch 2c nach oben seitlich aus der Triebwerkdüse 2 heraus und dabei bereits teilweise nach vorne umgelenkt wird, wodurch ein Rückwärtsschub erzeugt wird. Eine im oberen Endabschnitt der Schwenktüre 4 vorgesehene Umlenkplatte 5 lenkt dabei den Gasstrom 3 zusätzlich nach vorne um, so daß hierdurch der Rückwärtsschub erhöht wird. In der Ruheposition der Schwenktüre 4 nach den Fig. 3a, 4a hingegen tritt der Gasstrom 3 nach hinten gerichtet aus der Triebwerkdüse 2 aus und erzeugt hierbei einen Vorwärtsschub.

Das soeben genannte in den Fig. 3b, 4b obere Ende der Schwenktüre 4 wird im folgenden als dasjenige bezeichnet, welches in Arbeitsposition der Schwenktüre 4 bezüglich des Gasstromes 3 stromabwärts liegt. Der in Arbeitsposition stromaufwärtige Bereich der Schwenktüre 4 hingegen ragt voll in den Triebwerk-Gasstrom 3 hinein und liegt in Arbeitsposition somit in der Nähe der Längsachse 1.

Wie bereits erläutert, soll die Umlenkplatte 5 den seitlich aus der Triebwerkdüse 2 austretenden Gasstrom 3 nach vorne, d. h. in der zeichnerischen Darstellung nach links umlenken. Um diese Funktion optimal erfüllen zu können, muß die Umlenkplatte 5 über die Innenkontur 4a der Schwenktüre 4 hinausragen, d. h. sie muß dem entlang der Innenkontur 4a geführten Gasstrom 3 ähnlich einer Prallplatte einen deutlichen Strömungswiderstand entgegensetzen. Stromauf der Umlenkplatte 5 sollte daher die Innenwand 4b der Schwenktüre 4 gegenüber einem weiter stromaufwärtigen Bereich derselben eingezogen sein, wodurch bezüglich der Innenkontur 4a der Schwenktür 4 eine Aussparung 6 gebildet wird.

Ist diese Aussparung 6 relativ groß dimensioniert, so wie dies für das Erläuterungs-Beispiel nach den Fig. 3a, 3b dargestellt ist, so zeigt die Umlenkplatte 5 in der Arbeitsposition der Schwenktür 4 eine relativ große Wirkung. In der Ruheposition der Schwenktür 4 nach Fig. 3a hingegen bildet sich im Bereich dieser Aussparung 6 ein durch Wirbel dargestelltes Ablösegebiet 7, in welchem sich der ansonsten an der Innenwand 2a der Triebwerkdüse 2 entlanggeführte Gasstrom von der Wand ablöst. Auch ein Wandabschnitt 2b der Triebwerkdüse 2, der geringfügig in den in der Triebwerkdüse 2 vorgesehenen Durchbruch 2c zur Aufnahme der Schwenktür 4 hineinragt, vermag das Entstehen dieses Ablösegebietes 7 nicht zu verhindern. Daß dieses Ablösegebiet 7 in Ruheposition der Schwenktür 2 und somit beim üblichen Vorwärtsschubbetrieb des Flug-Strahltriebwerkes große Strömungsverluste verursacht, was im Hinblick darauf, daß es sich hierbei um dessen üblichen Betriebszustand handelt, äußerst nachteilig ist, liegt auf der Hand.

Eine demgegenüber günstigere Gestaltung zeigt die ebenfalls lediglich prinzipiell dargestellte Schwenktür 4 nach den Fig. 4a, 4b. Hier ist die Aussparung 6 wesentlich kleiner dimensioniert, wobei der Wandabschnitt 2b diese Aussparung 6 in der Ruheposition der Schwenktür 4 im wesentlichen vollständig überdeckt, so daß in dieser Ruheposition nach Fig. 4a kein Ablösegebiet 7 auftritt. Ein derartiges Ablösegebiet 7 bildet sich hierbei jedoch in der Arbeitsposition der Schwenktür 4, wie dies in Fig. 4b dargestellt ist. Die Umlenkplatte 5 ist hier sehr ineffizient, so daß bei einer derartigen Gestaltung der Schwenktür 4 eine schlechte Umlenkwirkung eintritt, nachdem die Umlenkplatten 5 in einem Bereich abgelöster Strömung arbeiten und daher ineffizient umlenken. Mit dieser Gestaltung ist somit lediglich ein geringer Rückwärtsschub erzeugbar.

Eine weitere Form einer Schwenktür ist in der oben genannten EP 0 368 725 B1 gezeigt. Hier ist in der sog. Aussparung ein relativ groß dimensionierter Strömungsleitkörper vorgesehen, der von der Innenwand der Schwenktür beabstandet ist Ein beträchtlicher Teil des in Arbeitsposition der Schwenktür auf die Aussparung auftreffenden Gasstromes wird durch einen zwischen dem Strömungsleitkörper und der Innenwand der Aussparung liegenden Kanal geleitet, so daß hierdurch zusammen mit einer geeignet gestalteten Umlenkplatte eine günstige Umlenkung der Strömung erfolgen soll. Dennoch ist auch bei dieser bekannten Lösung ein Ablösegebiet vorhanden, und zwar im Bereich zwischen dem Strömungsleitkörper und dem in Arbeitsposition stromaufwärtigen Abschnitt der Schwenktür, d. h. in jenem Bereich, in welchem in Arbeitsposition der Schwenktür der soeben genannte Kanal seinen Anfang hat. Aufgrund dieses ebenfalls vorhandenen Ablösegebietes kann auch diese bekannte Lösung nicht voll befriedigen.

Aufgabe der Erfindung ist es daher, eine weiter verbesserte Schubumkehrvorrichtung mit zumindest zwei Schwenktüren aufzuzeigen, bei der in Ruheposition der Schwenktüren nahezu kein Ablösegebiet auftritt und welches sich in Arbeitsposition der Schwenktüren dennoch durch eine wirkungsvolle Umlenkung insbesondere im Bereich der Umlenkplatte auszeichnet.

Die Lösung dieser Aufgabe ist dadurch gekennzeichnet, daß in den in Arbeitsposition stromaufwärtigen Endabschnitt der in Arbeitsposition nicht abgedeckten Aussparung ein in der Schwenktürwand verlaufender Hilfskanal mündet, der mit seiner entgegengesetzten Mündungsöffnung einen geringen Teil des Triebwerk-Gasstromes abschöpft, und daß die Innenwand der Triebwerkdüse einen Wandabschnitt aufweist, der in Ruheposition der Schwenktür die Aussparung zumindest im wesentlichen bündig abdeckt. Vorteilhafte Aus- und Weiterbildungen sind Inhalt der Unteransprüche.

Näher erläutert wird die Erfindung anhand eines bevorzugten Ausführungsbeispieles, von welchem in Fig. 1a im wesentlichen lediglich der die Aussparung aufweisende Bereich der Schwenktür in Ruheposition dargestellt ist, während Fig. 1 b diesen Bereich der Schwenktür in Arbeitsposition zeigt. Fig. 2 zeigt perspektivisch eine Hälfte einer erfindungsgemäßen Schwenktür. Dabei werden hier für die gleichen Elemente die gleichen Bezugsziffern wie in der obigen Erläuterung zum Stand der Technik, d.h. zu den Figuren 3a bis 4b verwendet.

In Fig. 1a ist somit der sog. in Arbeitsposition stromabwärtige Endabschnitt der Schwenktür 4 dargestellt, in welchem die bezüglich der Innenkontur 4a vorgesehene Aussparung 6 liegt. Der Wandverlauf der Aussparung 6, d. h. die Innenwand 4b der Schwenktür im Bereich der Aussparung 6, die gegenüber einem weiter stromaufwärtigen in der Figurendarstellung nach Fig. 1a weiter rechts liegenden Bereich eingezogen ist, ist strömungsgünstig gestaltet und - wie ersichtlich - im Übergangsbereich zur Umlenkplatte 5 gerundet ausgebildet.

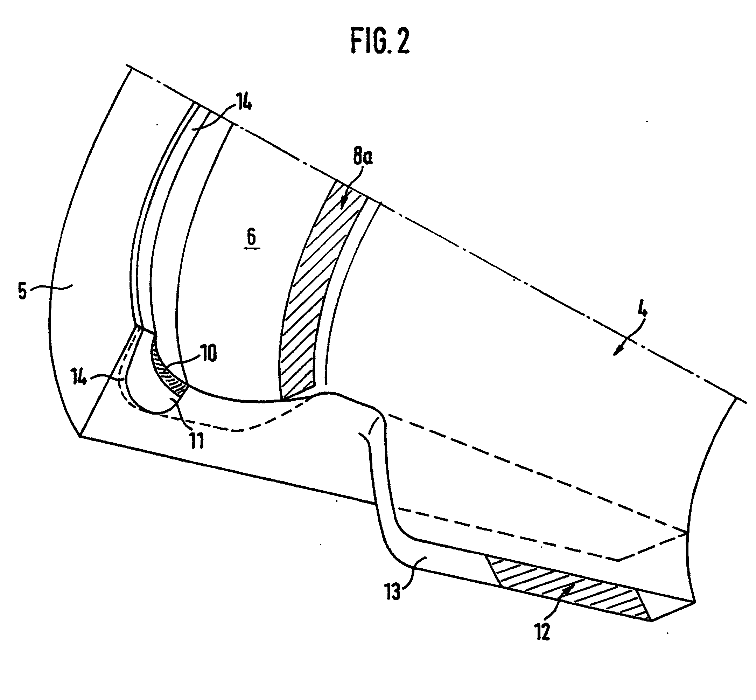

In den gegenüberliegenden, in Arbeitsposition stromaufwärtigen Endabschnitt der Aussparung 6 mündet ein in der Schwenktürwand 4c verlaufender Hilfskanal 8. Dieser Hilfskanal 8, der nahezu bis zum in Arbeitsposition stromaufwärtigen Ende der Schwenktür 4 innerhalb der Schwenktürwand 4c verlaufen kann und dort eine entgegengesetzte Mündungsöffnung aufweist, schöpft mit dieser entgegengesetzten Mündungsöffnung 12 (diese wird aus Fig. 2 ersichtlich) einen geringen Teil des Triebwerk-Gasstromes 3 ab, wenn sich die Schwenktür 4 in Arbeitsposition befindet.

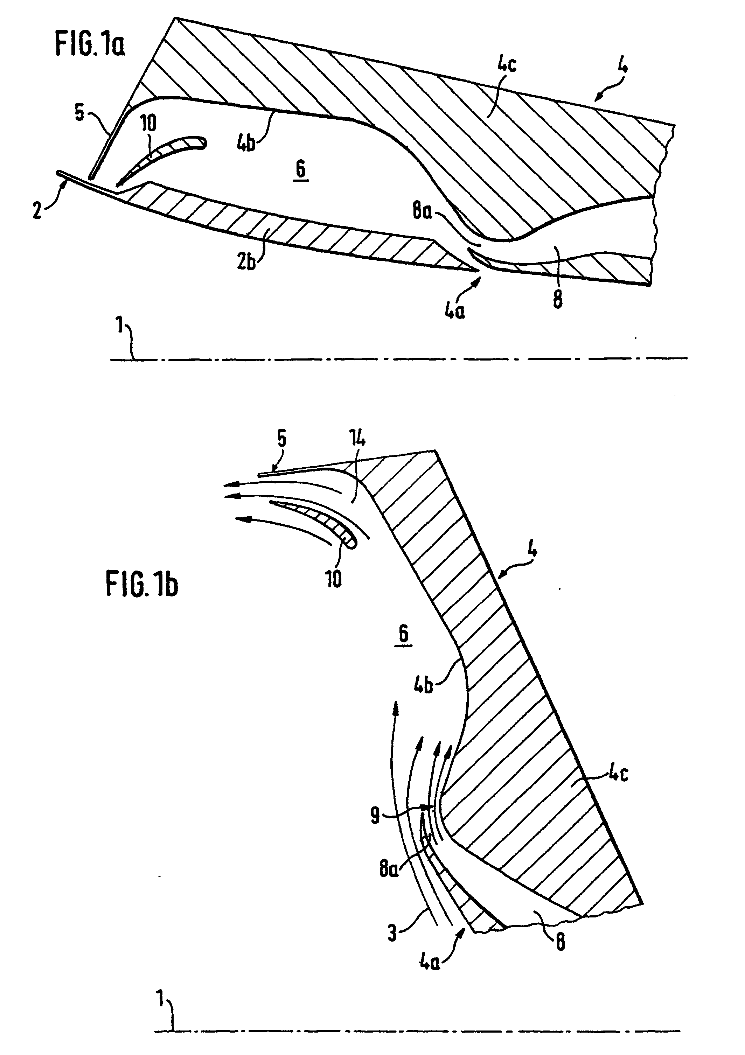

Dieser Zustand ist in Fig. 1b dargestellt Hier ist mit der Bezugsziffer 9 der über den Hilfskanal 8 in die Aussparung 6 eingeführte, von der Mündungsöffnung 12 abgeschöpfte Teil-Gasstrom bezeichnet, der bezüglich des an der Innenkontur 4a entlanggeführten Gasstromes 3 einen fluidischen Effekt ausübt. In Analogie zum bekannten Coanda-Effekt bewirkt dieser Teil-Gasstrom 9 nämlich, daß sich auch der Gasstrom 3 zumindest teilweise an die Innenwand 4b im Bereich der Aussparung 6 anlegt. Unterstützt wird dieser Coanda-Effekt dadurch, daß der Hilfskanal 8 ejektordüsenartig in die Aussparung 6 mündet. Dabei ist dieser sog Mündungsbereich 8a des Hilfskanales 8 in die Aussparung 6 breitschlitzförmig ausgebildet, wie die Perspektivdarstellung der Schwenktür 4 nach Fig. 2 zeigt.

Nachdem nun aber nicht nur der Teil-Gasstrom 9, sondern auch ein nicht unerheblicher Teil des Gasstromes 3 an der Innenwand 4b der Aussparung 6 entlanggeführt wird, kann die in diesem Zustand am stromabwärtigen Ende liegende Umlenkplatte 5 optimal wirken, d. h. den Gasstrom 3 wie gezeigt in optimaler Weise nach vorne umlenken.

In Ruheposition der Schwenktür 4 nach Fig. 1a hingegen ist praktisch die gesamte Aussparung 6 durch den in Durchbruch 2c in der Triebwerkdüse 2 hineinragenden Wandabschnitt 2b zumindest im wesentlichen bündig abgedeckt. Somit bildet sich weder in der Ruheposition der Schwenktür 4 nach Fig. 1a noch in der Arbeitsposition derselben nach Fig. 1b ein Ablösegebiet 7, so daß eine erfindungsgemäß gestaltete Schwenktür 4 in beiden Positionen höchst effizient arbeitet.

Weiter unterstützt werden kann die beschriebene Wirkung in Schwenktür-Arbeitsposition durch zumindest ein Umlenkprofil 10, welches in der Aussparung 6 beabstandet von deren Wandverlauf im Übergangsbereich zur Umlenkplatte 5 vorgesehen ist. Zwischen der Innenwand 4b der Aussparung 6 sowie dem Umlenkprofil 10 wird somit eine Passage 14 gebildet, in der Teil des Gasstromes 3 geführt und dabei wie gewünscht umgelenkt wird. Dieses Umlenkprofil 10 unterstützt somit die Umlenkplatte 5 in ihrer Wirkung.

Wie Fig. 2 zeigt ist das Umlenkprofil 10 über dem Umfang der Schwenktür 4 umlaufend ausgebildet und kann über bevorzugt endseitig vorgesehene Haltebleche 11 gehalten sein. (In Fig. 2 ist dieses Halteblech als durchsichtig dargestellt). Bevorzugt ist an den beiden Endseiten des Umlenkprofiles 10 jeweils ein derartiges Halteblech 11 vorgesehen, wodurch vorteilhafterweise ein seitliches Entweichen des in der Passage 14 geführten Gasstromes verhindert wird. Diese Haltebleche 11 steigern somit die Effizienz weiter. Dabei können weitere Haltebleche 11 über dem Schwenktür-Umfang problemlos installiert sein, so dies aus mechanischen Gründen notwendig ist

Fig. 2 zeigt weiterhin, daß die den geringen Teil des Triebwerk-Gasstromes 3, nämlich den sog. Teil-Gasstrom 9 abschöpfende Mündungsöffnung 12 des Hilfskanales 8 in einer Seitenflanke 13 der Schwenktür 4 vorgesehen ist. Hiermit wird dieser Teil-Gasstrom 9, der über den Hilfskanal 8 zur Vermeidung eines Ablösegebietes in die Aussparung 6 ausgeblasen wird, zweckmäßigerweise aus demjenigen Bereich, der in Arbeitsposition der Schwenktür 4 die Triebwerkdüse 2 abdeckt und damit nahezu dem Totaldruck des Triebwerk-Gasstromes 3 ausgesetzt ist, entnommen. Analysen haben gezeigt, daß damit in der dem Teil-Gasstrom 9 zugehörigen Strömung ein Druckverhältnis von ca. 1,3 bis 1,4 bereitgestellt werden kann. Mit der beschriebenen Lösung kann im übrigen auch der Durchflußkoeffizient, der ebenfalls eine wichtige und zu maximierende Größe ist, gesteigert werden.

Selbstverständlich können anstelle des hier gezeigten einzigen Umlenkprofiles 10 auch mehrere solcher Umlenkprofile vorgesehen sein, daneben sind selbstverständlich eine Vielzahl weiterer Abwandlungen insbesondere konstruktiver Art vom gezeigten Ausführungsbeispiel möglich, ohne den Inhalt der Patentansprüche zu verlassen. Stets erhält man eine Schubumkehrvorrichtung mit einer Schwenktür 4, die sich sowohl in Ruheposition als auch in Arbeitsposition derselben durch einen optimalen Wirkungsgrad auszeichnet.

### Bezugszeichenliste:

- 1: Längsachse des Flug-Strahltriebwerkes

- 2: Triebwerkdüse
- 2a: Innenwand von 2
- 2b: Wandabschnitt von 2
- 2c: Durchbruch in 2 zur Aufnahme von 4

- 3: Triebwerk-Gasstrom

- 4: Schwenktür
- 4a: Innenkontur von 4
- 4b: Innenwand von 4
- 4c: Schwenktürwand

- 5: Umlenkplatte
- 6: Aussparung in 4 bezüglich 4a
- 7: Ablösegebiet

- 8: Hilfskanal
- 8a: Mündungsbereich von 8 in 6
- 9: Teil-Gasstrom, durch 8 zugeführt

- 10: Umlenkprofil
- 11: Halteblech
- 12: "abschöpfende" Mündungsöffnung von 8
- 13: Seitenflanke von 4
- 14: Passage zwischen 10 und 4b von 6

## Patentansprüche

1. Schubumkehrvorrichtung eines Flug-Strahltriebwerkes mit zumindest zwei in der Triebwerkdüse (2) vorgesehenen Schwenktüren (4), die in Arbeitsposition den ansonsten durch die Triebwerkdüse (2) nach hinten gerichteten Triebwerk-Gastrom (3) seitlich aus der Triebwerkdüse (2) hinaus im Wesentlichen nach vorne umlenken und hierzu an ihrem in Arbeitsposition stromabwärtigen Ende zumindest eine Umlenkplatte (5) aufweisen, stromauf derer die Innenwand (4b) der Schwenktüren (4) gegenüber einem weiter stromaufwärtigen Bereich eingezogen ist und somit bezüglich der Innenkontur (4a) der Schwenktür (4) eine Aussparung (6) bildet, **dadurch gekennzeichnet,**
**dass** in den in Arbeitsposition stromaufwärtigen Endabschnitt der in Arbeitsposition nicht abgedeckten Aussparung (6) ein in der Schwenktürwand (4c) verlaufender Hilfskanal (8) mündet, der mit seiner entgegengesetzten Einlassöffnung (12) einen geringen Teil des Triebwerk-Gasstromes (3) abschöpft, und
**dass** die Innenwand (2a) der Triebwerkdüse (2) einen Wandabschnitt (2b) aufweist, der in Ruheposition der Schwenktür (4) die Aussparung (6) zumindest im Wesentlichen bündig abdeckt.

2. Schubumkehrvorrichtung nach Anspruch 1, **dadurch gekennzeichnet, dass** der Wandverlauf der Aussparung (6) strömungsgünstig gestaltet ist und im Übergangsbereich zur Umlenkplatte (5) gerundet ausgebildet ist.

3. Schubumkehrvorrichtung nach Anspruch 1 oder 2, **dadurch gekennzeichnet, dass** in der Aussparung (6) beabstandet von deren Wandverlauf im Übergangsbereich zur Umlenkplatte (5) zumindest ein Umlenkprofil (10) vorgesehen ist.

4. Schubumkehrvorrichtung nach einem der vorangegangenen Ansprüche, **dadurch gekennzeichnet, dass** der Hilfskanal (8) breitschlitzförmig sowie ejektordüsenartig in die Aussparung (6) mündet.

5. Schubumkehrvorrichtung nach einem der vorangegangenen Ansprüche, **dadurch gekennzeichnet, dass** die den geringen Teil (9) des Triebwerk-Gasstromes aufnehmende Einlassöffnung (12) des Hilfskanals (8) in einer Seitenflanke (13) der Schwenktür (4) vorgesehen ist.

## Claims

1. Thrust reverser for an aircraft jet engine with at least two eyelids (4) arranged in the engine jet pipe (2) which, in their working position, deflect the engine gas stream (3), which is otherwise conveyed rearward by the engine jet pipe (2), sideward out of the engine jet pipe (2) and essentially forward, and, for this purpose, are provided with a deflector (5) at that end of the eyelid which is downstream in the working position, upstream of which the inner wall (4b) of the eyelid (4) is set back relative to a further upstream area, thus forming a recess (6) relative to the inner contour (4a) of the eyelid (4),
**characterized in that**
an auxiliary duct (8), which extends inside the eyelid wall (4c), issues into the end section of the recess (6) not covered in the working position, with the end section being upstream in the working position and with this auxiliary duct (8) scooping, by way of its opposite mouth (12), a small amount of the engine gas stream (3), and
the inner wall (2a) of the engine jet pipe (2) features a wall section (2b) which, in the stowed position of the eyelid (4), covers the recess (6) in an at least essentially flush manner.

2. Thrust reverser in accordance with Claim 1,
**characterized in that**
the wall of the recess (6) is designed aerodynamically favourably and is rounded in the transition zone to the deflector (5).

3. Thrust reverser in accordance with Claim 1 or 2,
**characterized in that**
at least one deflector profile (10) is provided in the recess (6) remotely of its wall in the transition zone to the deflector (5).

4. Thrust reverser in accordance with one of the preceding Claims,
**characterized in that**
the auxiliary duct (8) issues into the recess (6) in the form of a wide slot and ejector-style.

5. Thrust reverser in accordance with one of the preceding Claims,
**characterized in that**
the mouth (12) of the auxiliary duct (8), which takes up the small portion (9) of the engine gas stream, is provided in a side flank (13) of the eyelid (4).

## Revendications

1. Dispositif d'inversion de poussée pour un réacteur d'avion comportant au moins deux volets pivotants (4) prévus dans la tuyère (2) et qui, en position de travail, dévient essentiellement vers l'avant, latéralement hors de la tuyère (2), la veine de gaz (3) du réacteur dirigée normalement par la tuyère (2) vers l'arrière, et comportent à leur extrémité amont en position de travail, au moins une plaque de renvoi (5), alors qu'en amont de celle-ci, la paroi intérieure (4b) des volets (4) est en retrait par rapport à une autre zone en amont, formant ainsi une cavité (6) par rapport au contour intérieur (4a) du volet pivotant (4),
**caractérisé en ce que**
dans le segment d'extrémité amont en position de travail, de la cavité (6) non couverte en position de travail, débouche un canal auxiliaire (8) passant dans la paroi (4c) du volet pivotant, ce canal auxiliaire prélevant par son orifice d'entrée (12), opposé, une faible partie du flux de gaz (3) du réacteur, et
la paroi intérieure (2a) de la tuyère (2) comporte un segment de paroi (2b) qui en position de repos du volet pivotant (4), couvre la cavité (6) au moins essentiellement à niveau.

2. Dispositif d'inversion de poussée selon la revendication 1,
**caractérisé en ce que**
le tracé de la paroi de la cavité (6) est de forme aérodynamique et dans la zone transitoire vers la plaque de renvoi (5) ce tracé est arrondi.

3. Dispositif d'inversion de poussée selon l'une quelconque des revendications 1 ou 2,
**caractérisé en ce que**
dans la cavité (6), à une distance du tracé de la paroi, dans la zone transitoire vers la plaque de renvoi (5), il est prévu au moins un profil de déviation (10).

4. Dispositif d'inversion de poussée selon l'une quelconque des revendications précédentes,
**caractérisé en ce que**
le canal auxiliaire (8) débouche sous la forme d'une fente large à la manière d'un éjecteur dans la cavité (6).

5. Dispositif d'inversion de poussée selon l'une quelconque des revendications précédentes,
**caractérisé en ce que**
l'orifice d'entrée (12) du canal auxiliaire (8) qui prélève une faible partie (9) de la veine de gaz du réacteur est prévu dans un flanc latéral (13) du volet pivotant (4).
